# EUROPÄISCHE PATENTSCHRIFT

(11) **EP 2 339 709 B1**
(45) Veröffentlichungstag und Bekanntmachung des Hinweises auf die Patenterteilung: **06.03.2013**
(21) Anmeldenummer: 10196475.7
(22) Anmeldetag: 22.12.2010
(51) Int. Cl.: H02G 1/00, H02G 3/08, H02G 3/22

(54) **System und entsprechendes Verfahren zum luftdichten Abdichten einer insbesondere feuchteadaptiven Dampfbremse oder Dampfsperre**
System and corresponding method for air-proof sealing of a moisture-adaptive vapour retarder or vapour barrier
Système et procédé correspondant pour l'étanchéification étanche à l'air, notamment d'une barrière pare-vapeur ou d'une barrière de vapeur s'adaptant à l'humidité

(30) Priorität: 28.12.2009 DE 102009060674
(43) Veröffentlichungstag der Anmeldung: 29.06.2011
(73) Patentinhaber: SAINT-GOBAIN ISOVER, 92400 Courbevoie (FR)
(72) Erfinder: Langkau, Michael, 68535, Edingen-Neckarshausen (DE)
(74) Vertreter: Bockhorni & Kollegen

(56) Entgegenhaltungen:
- WO-A1-88/04621
- DE-U1- 20 015 584

## Beschreibung

Die Erfindung betrifft ein System für eine luftdichte Abdichtung einer insbesondere feuchteadaptiven Dampfbremse oder Dampfsperre an einem Durchdringungsbereich, an welchem die Bremse oder Sperre von mindestens einem Kabel oder dergleichen Körper durchdrungen ist. Ferner betrifft die Erfindung ein entsprechendes Verfahren hierzu.

Derartige Dampfbremsen oder Dampfsperren werden vornehmlich für den Einsatz zur Wärmedämmung von Gebäuden verwendet und zwar maßgeblich in Zusammenhang mit Wärmedämmsystemen für Gebäude. Für die Wärmedämmung von Gebäuden, insbesondere Dächern, werden in der Regel diffusionsoffene Unterspannbahnen unterhalb der etwa durch Ziegel gebildeten Bedachung, darunter eine Wärmedämmschicht, etwa aus Mineralwolle, schließlich eine Dampfbremse und darunter eine Verkleidung verwendet. Mit dem Einsatz einer Dampfbremse werden vornehmlich zwei Absichten verfolgt. Zum einen soll eine Luftdichtheit der an sich diffusionsoffenen, luftdurchlässigen Wärmedämmschicht erzielt werden, um das Eindringen von kalter Außenluft in den Gebäudeinnenraum sowie das Entweichen warmer Raumluft aus dem Gebäude zu verhindern, wodurch Wärmeenergieverluste vermeidbar sind. Zum anderen soll die Dampfbremse eine gewisse Sperrwirkung gegen die Diffusion von Luftfeuchte aufweisen, um einen unerwünschten Feuchteeintrag in die Baukonstruktion zu vermeiden, der zu Tauwasserausfall und/oder Schimmelbildung führen kann.

Als Maß für die Sperrwirkung einer Dampfbremse oder Dampfsperre wird der Wasserdampf-Diffusionswiderstand als diffusionsäquivalente Luftschichtdicke (sog. S_{d}-Wert) angegeben, der nach DIN EN ISO 12572: 2001 ermittelt wird. In der Praxis unterscheidet man zwischen Dampfbremsen, bei denen der S_{d}-Wert in Bereichen zwischen kleiner 20 m, und Dampfsperren bei denen der S_{d}-Wert größer etwa 80 m liegt.

Feuchteadaptive Dampfbremsen weisen als Besonderheit einen von der Umgebungsfeuchte abhängigen S_{d}-Wert auf, der material- und dickenabhängig zwischen etwa 0,2 m und größer 5 m betragen kann, wobei der S_{d}-Wert mit zunehmender Umgebungsfeuchte abnimmt. Derartige feuchteadaptive Dampfbremsen sind beispielsweise in der DE 195 14 420 C1 1 oder der DE 101 36 089 A1 beschrieben, auf die für die bauphysikalische Wirkweise bezüglich des Zusammenspiels von Feuchteeintrag und Austrag verwiesen wird. Es sei angemerkt, dass die Luftdichtheit nicht mit der Wasserdampfdichtheit oder - dichtigkeit verwechselt werden darf, da eine Durchlässigkeit der Dampfbremse für Wasserdampf unter bestimmten Bedingungen gerade erwünscht ist.

Vereinfachend steht im Folgenden der Begriff Dampfbremse für alle bekannten Folien, also für insbesondere feuchteadaptive Dampfbremsen oder Dampfsperren.

Problematisch bei Dampfbremsen sind nun jene Bereiche, die aufgrund örtlicher Gegebenheiten mit Öffnungen versehen werden müssen, um eine Passage für Rohrleitungen, Kabel oder sonstige Körper, die die Folie durchdringen müssen, bereitzustellen. Die Schwierigkeit, die hierbei auftritt, ist es, gerade bei Körpern mit geringem Durchmesser, die Dampfbremse wieder vollständig abzudichten, so dass die Übergangsbereiche zwischen dem durchdringenden Körper und der Bremse wieder luftdicht sind.

Eine in der Baupraxis übliche Vorgehensweise ist es, in einem solchen Fall die Dampfbremse mit dem durchdringenden Körper unter Verwendung von Klebebändern zu verkleben. Ein hohes Maß an Dichtigkeit kann hierbei nicht erreicht werden. Insbesondere dann, wenn mehrere solcher Durchdringungen mit Verklebung vorliegen, summieren sich die Leckageströme auf, so dass es zu erheblichen Wärmeverlusten und/oder zu einem Nichtbestehen eines Blower-Door-Tests als Kriterium für die Luftdichtheit der Gesamtkonstruktion kommen kann.

Zur Lösung dieses Dichtheitsproblems sind aus dem Stand der Technik eine Vielzahl von Ansätzen bekannt. So offenbart die DE 200 15 584 U1 eine Manschette, die im Gebrauch zumindest in einem Teilbereich mit einer Tülle an einer Leitung anliegt und an der sich ein mit der Dampfbremse verbindbarer Kragen anschließt. Der Kragen kann zur Dampfbremse durch eine auf dem Kragen selbst aufgebrachte Klebschicht oder eine ringförmige, den Kragen umlaufend seitlich überragende Klebfolie abgedichtet sein. Die Tülle ist aus einem elastischen Material hergestellt. Die Abdichtung zur Leitung kann durch Klemmung, Einsatz einer elastischen Dichtung oder eine Quetschverschraubung erfolgen.

Nachteilig an dieser Manschette ist, dass für eine luftdichte Abdichtung die Tülle an den Durchmesser der üblicherweise kreisförmigen durchdringenden Leitung angepasst ist. Dies hat zur Folge, dass bei der Vielzahl an Leitungen, die im Dachbereich vorkommen können, insbesondere Kabel mit unterschiedlichen Durchmessern wie beispielsweise Satellitenkabel, 3- oder 5-polige Kabel oder Telefonkabel, Manschetten mit unterschiedlichen Abmessungen insbesondere der Tülle vorgehalten werden müssen. Auch eignen sich diese Manschetten nicht für typische Niedervoltkabel für insbesondere Halogeneinbauleuchten mit einem nicht-kreisförmigen Doppelleitungsquerschnitt.

Auch wenn mehrere Kabel an einer Stelle durch die Dampfbremse geführt werden sollen, wie etwa bei einer Mehrkanal-Satellitenanlage, bei der für jeden Kanal ein eigenes Kabel erforderlich ist, ist mit dieser Manschette eine Abdichtung prinzipiell unmöglich, da die aneinanderliegenden runden Kabel zwangsweise Zwickel ausbilden, die nicht abdichtbar sind. Eine Abdichtung mit dieser Manschette erfordert somit die aufwendige Abdichtung jedes einzelnen Kabels für sich mit einer eigenen Manschette.

Es ist Aufgabe der Erfindung, ein System bzw. ein Abdichtungssystem bereitzustellen, mit welchem ein luftdichtes Abdichten von Durchbrüchen oder Durchdringungen bzw. Durchdringungsbereichen auf einfache Art zuverlässig ermöglicht wird und die beschriebenen Nachteile des Stands der Technik behoben werden. Ferner ist es Aufgabe der Erfindung ein entsprechendes Verfahren hierzu vorzusehen.

Diese Aufgabe wird durch ein System nach Anspruch 1 und ein Verfahren nach Anspruch 15 gelöst.

Die Aufgabe wird vorrichtungsmäßig mittels eines Systems für eine luftdichte Abdichtung einer insbesondere feuchteadaptiven Dampfbremse oder Dampfsperre gelöst, die insbesondere zum Einsatz bei der Wärmedämmung von Gebäuden vorgesehen ist, an einem Durchdringungsbereich, an welchem die Dampfbremse oder - sperre von mindestens einem Kabel oder dergleichen Körper durchdrungen ist. Das System umfasst hierbei eine Manschettenvorrichtung mit einem Flächenelement zum insbesondere luftdichten Aufsetzen bzw. Anordnen der Manschettenvorrichtung auf die Dampfbremse oder Dampfsperre an dem Durchdringungsbereich sowie mit einem schlauchförmigen Element zum Umschließen des mindestens einen Körpers. Ferner weist das System mindestens ein Befestigungsmittel zum Befestigen, insbesondere Abkleben, von einem Übergangsbereich oder von Übergangsbereichen zwischen dem Flächenelement und der Dampfbremse oder Dampfsperre auf, mindestens ein erstes und ein zweites Verschlusselement zum Verschließen, insbesondere Abschnüren, von einem Übergangsbereich oder von Übergangsbereichen zwischen dem schlauchförmigen Element und dem mindestens einem Körper an einem ersten Bereich und an einem zweiten Bereich des schlauchförmigen Elements sowie einen Dichtstoff zum Befüllen des schlauchförmigen Elements zwischen den zwei Verschlusselementen.

Ein wesentlicher Punkt der Erfindung liegt darin, dass, das System Mittel zur Verfügung stellt, mit welchen Durchbrüche in Dampfbremsen oder Sperren auf einfache Weise, trotz der Durchdringung von Körpern, insbesondere auch mit kleinen Durchmessern, abgedichtet werden können.

Das schlauchförmige Element ist an mindestens zwei Bereichen mittels jeweils des ersten und zweiten Verschlusselements abschnürbar, derart, dass ein Zwischenbereich vorgesehen ist, der mittels des insbesondere pastösen Dichtstoffes befüllbar ist. Aufgrund des vollständig befüllten Zwischenbereichs ist der Weg für Luft durch das Manschettenelement vollständig versperrt, gerade auch die Falten werden zuverlässig abgedichtet, so dass insgesamt eine luftdichte Abdichtung gewährleistet ist. Der Dichtstoff übernimmt also die eigentliche Abdichtung, unabhängig davon, ob nur ein Kabel oder mehrere Kabel, ggf. mit unterschiedlichem Durchmesser, durch eine Manschettenvorrichtung geführt sind, da die vollständige Befüllung auch die "Zwickelbereiche" zwischen den Kabeln betrifft.

Die Manschettenvorrichtung umfasst vorzugsweise das Flächenelement ("Kragen") mit einem insbesondere mittig angeordneten Lochbereich und das an dem Flächenelement angeordnete, insbesondere aufgesetzte schlauchförmige Element ("Tülle"), das an den Enden Öffnungen zur Durchführung des Körpers aufweist und mit einem Ende in den Lochbereich des Flächenelements mündet. Das schlauchförmige Element ist mit dem Flächenelement einstückig, insbesondere luftdicht, verbunden, und derart ausgebildet, dass es mittels des ersten und zweiten Verschlusselements zur dauerhaft luftdichten Abdichtung verschließbar, insbesondere abschnürbar ist, so dass der Körper eng von dem schlauchförmigen Element umgeben ist.

In einer weiteren bevorzugten Ausführungsform ist die Manschettenvorrichtung derart ausgebildet, dass sie mittels des Flächenelements auf die Dampfbremse oder Dampfsperre aufsetzbar ist, derart, dass der Durchdringungsbereich abgedeckt ist. Vorzugsweise sind dann die Übergangsbereiche zwischen der Manschettenvorrichtung und der Dampfbremse oder Dampfsperre mittels des Befestigungsmittels, insbesondere mittels mindestens eines Klebeelements, insbesondere luftdicht abdichtbar. Die Manschette oder Manschettenvorrichtung ermöglicht also das erneute Verschließen der durchbrochenen Folie.

Vorzugsweise ist das schlauchförmige Element der Manschettenvorrichtung in Richtung weg vom Flächenelement sich verjüngend ausgebildet. Wie bereits oben beschrieben, soll das Schlauchelement abgeschnürt werden und zwar mittels eines Verschlusselements bzw. mehrerer Verschlusselemente. Zwei Verschlusselemente zur Ausbildung einer im Wesentlichen abgeschlossenen Kammer sind hier besonders geeignet. Dabei soll das Schlauchelement fest am durchdringenden Körper, also z. B. dem Kabel anliegen. Desto weniger Material zusammengeschnürt werden muss, desto besser können Schlauchelement und Kabel miteinander verschnürt werden, da keine oder nur geringe Faltenbildung am Schlauchelement auftritt. Die Falten stellen wieder Durchgangsöffnungen dar, die das luftdichte Abdichten zwischen Kabel bzw. Körper und Manschette erschweren würden. Mit der Verjüngung, z. B. einem konischen Verlauf des schlauchförmigen Elements, wird Material in Richtung weg vom Flächenelement weggenommen und eingespart. Dies erleichtert das Abschnüren.

In einer weiteren Ausführungsform ist das schlauchförmige Element der Manschettenvorrichtung, insbesondere das sich verjüngend ausgebildete, derart ausgebildet, dass es auf eine gewünschte Länge kürzbar ist. Damit lässt sich die vom Flächenelement wegweisende Öffnung des Schlauchelements auf eine passende Größe zuschneiden, da über die Verjüngung unterschiedliche Öffnungsgrößen bzw. - durchmesser zur Verfügung stehen. Am einfachsten lassen sich Kabel oder ein Kabelbaum aus mehreren Kabeln, auch unterschiedlicher Durchmesser, und Schlauchelement miteinander verschnüren, wenn der Öffnungsdurchmesser nur geringfügig größer ist, als der projektierte Durchmesser des durchgeführten Körpers. Die Faltenbildung kann so - wie bereits oben erläutert - weitgehend vermieden werden. Weiterhin kann die Variantenzahl der Manschettenvorrichtung, d.h. die Anzahl an vorzuhaltenden Manschettenvorrichtungen mit einem unterschiedlichen Auslassdurchmesser, reduziert werden.

Das Flächenelement weist vorzugsweise eine Größe von etwa 8 x 8 cm bis 15 x 15 cm auf, so dass auch größere Durchdringungsbereiche abdeckbar sind. Möglich ist es natürlich auch, das Flächenelement auf eine gewünschte Größe zuzuschneiden, wobei eine hinreichende Breite von etwa mindestens 3 cm für eine anschließende luftdichte Verklebung mit der Dampfbremse zu berücksichtigen ist. Beliebige Formen der Flächenelemente sind möglich, z. B. rechteckförmig, rund etc.

Nach einer zweckmäßigen Maßgabe der Erfindung ist die Manschettenvorrichtung aus dem Material der Dampfbremse oder Dampfsperre ausgebildet, z. B. aus einer feuchteadaptiven Folie, insbesondere aus einer Polyamid-Folie. Aufgrund der im Vergleich zu einer Dampfbremse flächenmäßig geringen Ausdehnung des Flächenelements kann die Manschettenvorrichtung aber auch bei einer feuchteadaptiven Dampfbremse aus einem dampfdichten Material bestehen.

Auch kann die Manschettenvorrichtung aus Aluminium-Folie oder aus dergleichen wasserdampfundurchlässigem und luftundurchlässigem Material ausgebildet sein.

Die Folien können aus einer einzelnen Folienschicht ausgebildet sein oder aber es ist ein Mehrschichtenaufbau vorgesehen, je nach Anwendungszweck.

In einer besonders bevorzugten Ausführung ist das schlauchförmige Element derart elastisch ausgelegt, dass eine Biegbarkeit um bis zu 90° ohne dessen Beschädigung, d.h. ohne Verlust der Luftdichtheit, auf einer sehr kurzen Strecke von z. B. kleiner 4 cm ausgehend vom Flächenelement möglich ist. Damit ist vorteilhaft eine luftdichte Durchführung durch eine Dampfbremse bereitgestellt, bei der beispielsweise ein Kabel etwa im Gefach einer Konterlattung einer Untersparrenverkleidung geführt ist und dort die Dampfbremse durchdringt.

Die Manschettenvorrichtung ist vorzugsweise als einstückig ausgebildetes Formteil vorgesehen. Sie wird z. B. in einem Tiefziehverfahren als ein Universalformteil hergestellt. Alternativ kann die Manschettenvorrichtung auch aus dem Flächenelement und dem schlauchförmigen Element zusammengesetzt sein, etwa durch Verklebung oder Verschweißung. Der zweiteilige Aufbau bietet den Vorteil einer herstellungstechnisch einfachen Ausrüstung von Flächenelement und schlauchförmigem Element mit unterschiedlichen Steifigkeiten, etwa durch unterschiedliche Materialdicken und/oder durch unterschiedliche Materialien (aber auch wenn beide Elemente aus demselben Material ausgebildet sind, ist es möglich, diese durch Fügetechnik miteinander zu verbinden).

So kann z. B. das schlauchförmige Element mit einer Dicke von etwa 50 µm und das Flächenelement mit einer Dicke von etwa 80 µm ausgebildet sein (oder auch umgekehrt, je nach Anforderung an die einzelnen Elemente). Das schlauchförmige Element kann z. B. aus PA-Folie, das Flächenelement aus PE-Folie, aus Aluminium-Folie, aus Kautschuk-Folie etc. ausgebildet sein. Sind beide Elemente aus unterschiedlichen Materialien ausgebildet, können auch unterschiedliche Anforderungen an die einzelnen Elemente berücksichtigt werden.

Als Verschlusselement zum Zusammenschnüren von durchdringendem Körper und Schlauchelement kann z. B. ein Kabelbinder, eine Rohrschelle, eine Schnur oder dergleichen Element vorgesehen sein. Kabelbinder eignen sich zum irreversiblen Verschluss, der nicht ohne Weiteres öffenbar ist.

Als Dichtstoff kann beispielsweise Silikon oder ein üblicher Dampfbremsen-Dicht-und -Klebstoff oder dergleichen Material verwendet werden.

Solche Dampfbremsen-Dicht- und -Klebstoffe sind in der Praxis bekannt und werden zum Anschließen von Dampfbremsfolien und auch zum Abdichten am Mauerwerk verwendet. Bevorzugt liegen diese Stoffe in Kartuschen mit handelsüblicher Pistolenform vor und kommen als raupenförmiger Klebemassenauftrag zum Einsatz. Bevorzugt sind inzwischen Dampfbremsen-Dicht- und -Klebstoffe, welche im Wesentlichen frei von flüchtigen organischen Verbindungen (VOC) sind. Derartige einkomponentige Dichtmassen auf Basis einer wässrigen Dispersion von Polyacrylaten sind beispielsweise in der DE 100 00 940 B4 beschrieben. Eine weitere einkomponentige Dichtmasse auf Basis einer wässrigen Dispersion aus Vinylpolymeren ist beispielsweise in der DE 201 22 638 U1 und der DE 200 23 180 U1 beschrieben. Darüber hinaus ist aus der EP 1 724 321 A1 ein VOC-freies und im Wesentlichen wasserfreies Kleb- und Dichtstoffsystem für Dampfbremsfolien beschrieben, welches durch Umgebungsfeuchtigkeit ausgehend von Prepolymeren zu stärker polymerisierten Produkten seine Dichtfähigkeit entfaltet.

Eigenständiger Schutz wird beansprucht für ein Verfahren zum luftdichten Abdichten einer insbesondere feuchteadaptiven Dampfbremse oder Dampfsperre, die insbesondere zum Einsatz bei der Wärmedämmung von Gebäuden vorgesehen ist, an einem Durchdringungsbereich, an welchen die Dampfbremse oder Dampfsperre von mindestens einem Kabel (mindestens ein Kabel oder auch mehrere) oder dergleichen Körper durchdrungen ist mit einem System, wie es oben beschrieben ist, wobei das Verfahren folgende Schritte aufweist:
- Anbringen der Dampfbremse oder Dampfsperre an einer hierfür vorgesehenen Stelle,
- Ausschneiden der Dampfbremse oder Dampfsperre an Bereichen, die von dem Körper oder den Körpern durchdrungen werden, zur Ausbildung des Durchdringungsbereichs,
- Abdecken des Durchdringungsbereichs mit der Manschettenvorrichtung wie sie oben beschrieben ist, derart, dass der oder die Körper durch die Manschettenvorrichtung durchgeführt ist bzw. sind,
- Abdichten des Übergangsbereichs oder der Übergangsbereiche zwischen dem Flächenelement der Manschettenvorrichtung und der Dampfbremse oder Dampfsperre mittels des mindestens einen Befestigungselements,
- Abdichten des Übergangsbereichs oder der Übergangsbereiche zwischen dem schlauchförmigen Element der Manschettenvorrichtung und dem Körper bzw. den Körpern, mit folgenden Schritten:
   - Verschließen, insbesondere Abschnüren des ersten Bereichs des schlauchförmigen Elements mittels des ersten Verschlusselements derart, dass der Körper eng von dem schlauchförmigen Element umgeben ist,
   - Einfüllen des Dichtstoffes über eines der Enden des schlauchförmigen Elements, derart, dass ein Bereich des schlauchförmigen Elements an dem Verschlusselement mit dem Dichtstoff befüllt ist,
   - Verschließen, insbesondere Abschnüren des zweiten Bereichs des schlauchförmigen Elements mittels des zweiten Verschlusselements derart, dass der oder die Körper eng von dem schlauchförmigen Element umgeben ist bzw. sind und der Dichtstoff im Wesentlichen zwischen den beiden Verschlusselementen angeordnet ist.

Vorzugsweise wird das schlauchförmige, sich verjüngend ausgebildete Element an dem dem Flächenelement abgewandten Ende zur Ausbildung eines dem Körper oder den Körpern angepassten Durchmessers gekürzt.

Weitere Ausführungsformen der Erfindung ergeben sich aus den Unteransprüchen. Nachfolgend wird die Erfindung anhand von Ausführungsbeispielen beschrieben, die anhand der Abbildungen näher erläutert werden. Hierbei zeigen:
- - Fig. 1: eine Ausführungsform einer Manschettenvorrichtung als Bestandteil des erfindungsgemäßen Systems bzw. Abdichtungssystems;
- - Fig. 2: Verschlusselemente, die mit der Manschettenvorrichtung gem. Figur 1 angewendet werden;
- - Fig. 3: das Abdichtungssystem in verarbeitetem Zustand;
- - Fig. 4: einen Querschnitt durch das Abdichtungssystem im Fall einer Durch-führung von drei Kabeln in der Ebene des zweiten Verschlusselements im verarbeiteten Zustand.

In der nachfolgenden Beschreibung werden für gleiche und gleich wirkende Teile dieselben Bezugsziffern verwendet.

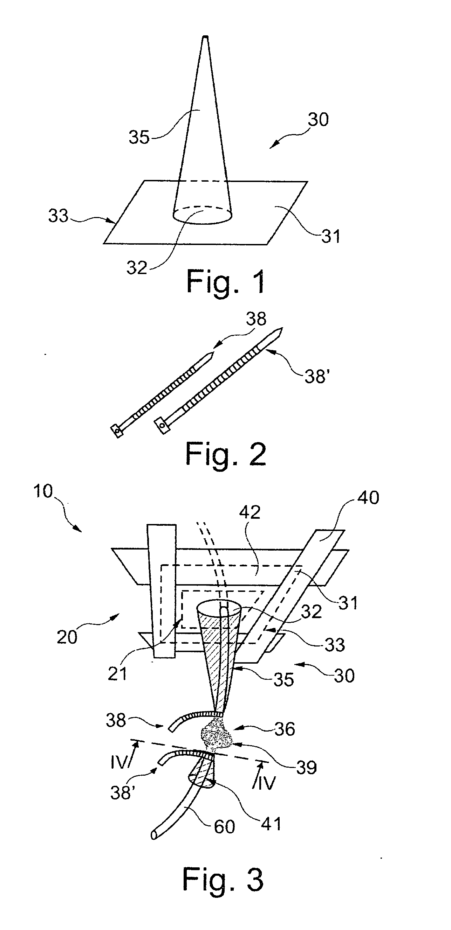

Fig. 1 zeigt eine Manschettenvorrichtung 30 als Bestandteil des erfindungsgemäßen Systems, wie sie zur insbesondere luftdichten Abdichtung einer Dampfbremsfolie oder auch Dampfsperrfolie verwendet wird, wenn diese von einem Körper, hier einem Kabel (s. Fig.3), durchdrungen sind. Dampfbremsfolien dieser Art werden u. a. für den Einsatz bei der Wärmedämmung von Gebäuden verwendet und zwar maßgeblich in Zusammenhang mit Wärmedämmsystemen.

Wie aus Fig. 1 zu entnehmen ist, weist die Manschettenvorrichtung 30 ein Flächenelement 31 und ein schlauchförmiges Element 35 auf, das sich verjüngend in Richtung weg vom Flächenelement 31 ausgebildet ist.

Das Flächenelement 31 ist mit einem im Wesentlichen mittig angeordneten Lochbereich 32 ausgebildet, in den das schlauchförmige Hütchen oder Element 35 mündet. Das schlauchförmige Element 35 ist an beiden Enden offen, so dass z. B. ein Kabel 60 (s. Fig. 3) durchgeführt werden kann. Beide Elemente sind einstückig miteinander verbunden, insbesondere luftdicht.

Das Manschettenelement bzw. die Manschettenvorrichtung 30 ist beispielsweise als Universalformteil in einem Tiefziehprozess herstellbar und ist so als einfach gestaltetes Bauteil kostengünstig in der Herstellung. Im Ausführungsbeispiel wird die Manschettenvorrichtung 30 z.B. aus einer Polyamidfolie gezogen.

Fig. 3 zeigt ein System 10 für eine luftdichte Abdichtung einer Dampfbremse in Form einer Folie, die insbesondere zum Einsatz bei der Wärmedämmung von Gebäuden vorgesehen ist, an Bereichen, an welchen die Dampfbremse von einem Kabel oder dergleichen Körper durchdrungen ist. Beispielhaft wird der Einsatz bei der Wärmedämmung eines Gebäudedaches (nicht gezeigt) beschrieben.

Unabhängig von der Art der Dampfbremse wird für deren Verlegung, d.h. für alle Anschlüsse an andere Konstruktionsbauteile wie Wände, Decken, Dachkonstruktionen, insbesondere Sparren, eine Luftdichtheit gefordert. Dies gilt auch für die diversen Bauelemente wie Rohre, Leitungen, Kabel, etc., die in einem Dach vorkommen können und durch die Dampfbremse hindurchgeführt werden müssen. Hierzu ist die Folie 20 um den Bereich des durchdringenden Körpers 60 auszuschneiden. Eine so entstandene Öffnung oder Durchdringung 21 der Folie 20 wird nun mit der Manschettenvorrichtung 30 abgedeckt und zwar so, dass die Manschette 30 die durchdrungene Folie 20 über den Durchdringungsbereich 21 hinweg überlappt. Das Flächenelement 31 lässt sich bei Bedarf entlang einer Außenkontur 33 auf die gewünschte Größe zuschneiden. Der durchdringende Körper 60 ist dabei durch das schlauchförmige Element 35 und den Flächenbereich bzw. das Flächenelement 31 hindurchzuführen. Fig. 3 zeigt ein Kabel 60, das die Manschettenvorrichtung 30 durchläuft.

Mit Fig. 3 ist angedeutet, dass die Manschettenvorrichtung 30 an einer rauminnenseitig in einer Dachkonstruktion angebrachten Dampfbremsfolie oder Dampfsperrfolie angeordnet ist, wobei das Kabel 60 vom Dach (nicht gezeigt) in Richtung Rauminneres verläuft.

Nun kann die Folie 20 luftdicht abgedichtet werden, so dass keine Leckagen zwischen Körper 60 und Manschettenvorrichtung 30 bzw. zwischen Manschettenvorrichtung 30 und Folie 20 bestehen bleiben. Die Übergangsbereiche 41, 42 und damit Leckagebereiche bilden sich einerseits zwischen Kabel 60 und schlauchförmigem Element 35 und andererseits zwischen Flächenelement 31 und Dampfbremsfolie 20. Einerseits wird die Manschettenvorrichtung 30, d. h., das Flächenelement 31 hierfür mit der Folie 20 am Überlappungsbereich 42 verklebt, andererseits müssen schlauchförmiges Element 35 und Körper 60 am entsprechenden Übergangsbereich 41 miteinander "verbunden" werden, d. h. Spalte sind abzudichten.

Das Flächenelement 35 wird beispielsweise mit Klebestreifen als Befestigungsmittel bzw. Klebeelemente 40 auf der Folie 20 verklebt. Am schlauchförmigen Element 35 sind zwei Kabelbinder als Verschlusselemente 38, 38' vorgesehen, die das schlauchförmige Element 35 am Kabel 60 befestigen (siehe auch Fig. 2), möglichst so, dass Faltenbildung und damit Luftdurchgangsbereiche vermieden werden. Damit entsteht zwischen den Verschlusselementen 38, 38' ein Zwischenraum oder Zwischenbereich 36, der mittels eines insbesondere pastösen Dichtstoffes 39, hier ein Dampfbremsen-Kleb- und -Dichtstoff, befüllt ist. Damit sind sämtliche etwaigen Luftkanäle abgeschlossen bzw. abgedichtet.

Zur Befüllung des Zwischenraumes 36 kann zuerst das flächenelement-nahe erste Verschlusselement 38 angebracht werden, dann wird der Dichtstoff 39 eingefüllt. Schließlich lässt sich das zweite Verschlusselement 38' derart anbringen, dass der Dichtstoff 39 in dem Zwischenraum oder Zwischenbereich 36 eingeschlossen ist.

Der pastöse Dichtstoff 39 verbleibt im Wesentlichen im Zwischenbereich 36. Er kann auch, abhängig von der aufgegebenen Menge und dem Grad der Einschnürung des Zwischenbereichs 36 durch die Verschlusselemente 38, 38', in den Faltenbereich quasi hineingepresst werden, was im Sinne einer gesicherten Abdichtung sogar bevorzugt ist.

Um den Durchmesser des schlauchförmigen Elements 35 möglichst an den Querschnitt des durchdringenden Körpers 60 anzupassen, lässt sich dieses entsprechend kürzen. Damit ändert (vergrößert) sich der Durchmesser des offenen Endes am sich verjüngenden Bereich.

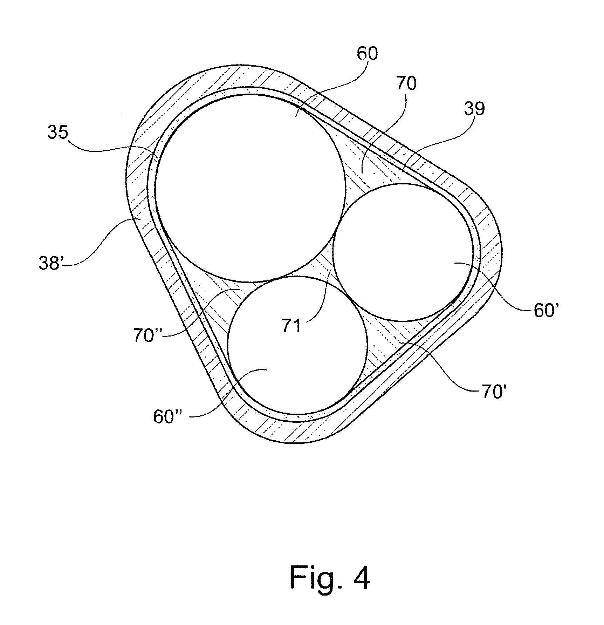

Fig. 4 zeigt einen Querschnitt (vereinfachte Darstellung ohne den Schließmechanismus des Verschlusselements 38') durch das erfindungsgemäße Abdichtungssystem im Fall einer Durchführung von drei Kabeln 60, 60', 60" in der Ebene des zweiten Verschlusselements 38' im verarbeiteten Zustand (Schnitt IV - IV aus Fig. 3). Zur Erzielung der geforderten Abdichtung wird hier bewusst eine größere Menge des pastösen Dichtstoffs 39 bei der Befüllung des Zwischenraums wie zuvor beschrieben aufgegeben. Infolge des Anbringens des Verschlusselements 38 legt sich das schlauchförmige Element 35 tangential an die Außenkontur des Kabelbündels aus den hier drei Kabeln 60, 60' und 60" an, wodurch die außenseitigen Zwickel 70, 70' und 70" und das Kernzwickel 71 resultieren. Durch die gleichzeitige Volumenverringerung des Zwischenraums 36 während dieses Vorgangs dringt der pastöse Dichtstoff 39 insbesondere auch in den Kernzwickel 71, so dass eine vollflächige Abdichtung aller Zwickel 70, 70', 70" und 71 erfolgt.

Es sei erwähnt, dass der besseren Übersicht wegen die Kabel 60, 60', 60" hier nur als einfache Kreise und auch nicht schraffiert dargestellt sind.

Mit dem erfindungsgemäßen System und dem entsprechenden Verfahren lassen sich Öffnungen, bedingt durch Körper, die sich durch die Dampfbremse erstrecken, also durch sie hindurch verlaufen, auf einfache Art und Weise mit einem hohen Maß an Dichtigkeit verschließen. Die Manschettenvorrichtung lässt sich auf die gewünschte Form zuschneiden (in Bezug auf das Flächenelement und das schlauchförmige Element), so dass sich individuelle Lösungen bei der Abdeckung von Durchdringungen ergeben.

### Bezugszeichenliste

- 10: System für eine luftdichte Abdichtung
- 20: Dampfbremse oder Dampfsperre, Folie
- 21: Öffnung, Durchdringung, Durchdringungsbereich
- 30: Manschettenvorrichtung
- 31: Flächenelement
- 32: Lochbereich
- 33: Außenkontur
- 35: Schlauchförmiges Element
- 36: Zwischenbereich
- 38, 38': Verschlusselement
- 39: Dichtstoff
- 40: Befestigungsmittel, Klebeelement
- 41: Übergangs-, Überlappungsbereich Körper - Manschettenvorrichtung
- 42: Übergangs-, Überlappungsbereich Manschettenvorrichtung-Dampfbremse oder Dampfsperre
- 60, 60', 60": Durchdringender Körper, Kabel
- 70, 70', 70": Zwickel
- 71: Kernzwickel

## Patentansprüche

1. System (10) für eine luftdichte Abdichtung einer insbesondere feuchteadaptiven Dampfbremse oder Dampfsperre (20), die insbesondere zum Einsatz bei der Wärmedämmung von Gebäuden vorgesehen ist, an einem Durchdringungsbereich (21), an welchen die Dampfbremse oder Dampfsperre (20) von mindestens einem Kabel oder dergleichen Körper (60) durchdrungen ist, umfassend
- eine Manschettenvorrichtung (30), umfassend
- ein Flächenelement (31) zum insbesondere luftdichten Aufsetzen der Manschettenvorrichtung (30) auf die Dampfbremse oder Dampfsperre an dem Durchdringungsbereich,
- ein schlauchförmiges Element (35) zum Umschließen des mindestens einen Körpers (60),
- mindestens ein Befestigungsmittel (40) zum Befestigen, insbesondere Abkleben, von einem Übergangsbereich oder von Übergangsbereichen (42) zwischen dem Flächenelement (31) und der Dampfbremse oder Dampfsperre,
- mindestens ein erstes Verschlusselement (38) und ein zweites Verschlusselement (38') zum Verschließen, insbesondere Abschnüren, von einem Übergangsbereich oder von Übergangsbereichen (41) zwischen dem schlauchförmigen Element (35) und dem mindestens einen Körper (60), an einem ersten Bereich und an einem zweiten Bereich des schlauchförmigen Elements (35),
- einen Dichtstoff (39) zum Befüllen des schlauchförmigen Elements (35) zwischen den zwei Verschlusselementen (38, 38').

2. System nach Anspruch 1,
**dadurch gekennzeichnet, dass**
das Flächenelement (31) mit einem insbesondere mittig angeordneten Lochbereich (32) ausgebildet ist, und das schlauchförmige Element (35) an dem Flächenelement (31) angeordnet ist, wobei das schlauchförmige Element (35) an den Enden Öffnungen zur Durchführung des Körpers (60) aufweist und mit einem Ende in den Lochbereich (32) des Flächenelements (31) mündet,
wobei das schlauchförmige Element (35) mit dem Flächenelement (31) einstückig, insbesondere luftdicht, verbunden ist,
und derart ausgebildet ist, dass es mittels der Verschlusselemente (38, 38') zur dauerhaft luftdichten Abdichtung verschließbar ist, so dass der Körper (60) eng von dem schlauchförmigen Element (35) umgeben ist.

3. System nach Anspruch 1 oder 2,
**dadurch gekennzeichnet, dass**
die Manschettenvorrichtung (30) mittels des Flächenelements (31) auf die Dampfbremse oder Dampfsperre (20) aufsetzbar ist, derart, dass der Durchdringungsbereich (21) abgedeckt ist.

4. System nach einem der vorhergehenden Ansprüche,
**dadurch gekennzeichnet, dass**
das Befestigungsmittel, als mindestens ein Klebeelement (40) zum insbesondere luftdichten Abdichten ausgebildet ist.

5. System nach einem der vorhergehenden Ansprüche,
**dadurch gekennzeichnet, dass**
das schlauchförmige Element (35) der Manschettenvorrichtung (30) in Richtung weg vom Flächenelement (31) sich verjüngend ausgebildet ist.

6. System nach einem der vorhergehenden Ansprüche,
**dadurch gekennzeichnet, dass**
das schlauchförmige Element (35) der Manschettenvorrichtung (30), insbesondere das sich verjüngend ausgebildete schlauchförmige Element, derart ausgebildet ist, dass es auf eine gewünschte Länge kürzbar ist.

7. System nach einem der vorhergehenden Ansprüche,
**dadurch gekennzeichnet, dass**
das schlauchförmige Element (35) der Manschettenvorrichtung (30) eine insbesondere beschädigungsfreie Biegbarkeit um bis zu 90° innerhalb einer Strecke von kleiner 4 cm ab dem Flächenelement (31) aufweist.

8. System nach einem der vorhergehenden Ansprüche,
**dadurch gekennzeichnet, dass**
die Manschettenvorrichtung (30) aus dem Material der Dampfbremse oder Dampfsperre ausgebildet ist.

9. System nach einem der vorhergehenden Ansprüche,
**dadurch gekennzeichnet, dass**
die Manschettenvorrichtung (30) aus feuchteadaptiver Folie, insbesondere aus Polyamid-Folie, ausgebildet ist.

10. System nach einem der vorhergehenden Ansprüche,
**dadurch gekennzeichnet, dass**
die Manschettenvorrichtung (30) aus Aluminium-Folie oder aus dergleichen wasserdampfundurchlässigem und luftundurchlässigem Material ausgebildet ist.

11. System nach einem der vorhergehenden Ansprüche,
**dadurch gekennzeichnet, dass**
die Manschettenvorrichtung (30) als einstückig ausgebildetes Formteil vorgesehen ist.

12. System nach einem der vorhergehenden Ansprüche,
**dadurch gekennzeichnet, dass**
das Flächenelement (31) und das schlauchförmige Element (35) der Manschettenvorrichtung (30) unterschiedliche Materialdicken aufweisen und/oder aus unterschiedlichen Materialien ausgebildet sind.

13. System nach einem der vorhergehenden Ansprüche,
**dadurch gekennzeichnet, dass**
das Verschlusselement (38, 38') als ein Kabelbinder, eine Rohrschelle, eine Schnur oder dergleichen Element ausgebildet ist.

14. System nach einem der vorhergehenden Ansprüche,
**dadurch gekennzeichnet, dass**
der Dichtstoff (39) ein Silikonmaterial oder dergleichen Material ist.

15. Verfahren zum luftdichten Abdichten einer insbesondere feuchteadaptiven Dampfbremse oder Dampfsperre (20), die insbesondere zum Einsatz bei der Wärmedämmung von Gebäuden vorgesehen ist, an einem Durchdringungsbereich (21), an welchen die Dampfbremse oder Dampfsperre (20) von mindestens einem Kabel oder dergleichen Körper (60) durchdrungen ist,
mit einem System nach einem der Ansprüche 1 bis 14,
wobei das Verfahren folgende Schritte aufweist:
- Anbringen der Dampfbremse oder Dampfsperre (20) an einer hierfür vorgesehenen Stelle,
- Ausschneiden der Dampfbremse oder Dampfsperre (20) an Bereichen, die von dem Körper durchdrungen werden, zur Ausbildung des Durchdringungsbereichs (21),
- Abdecken des Durchdringungsbereichs (21) mit der Manschettenvorrichtung (30), so dass der mindestens eine Körper (60) durch die Manschettenvorrichtung (30) durchgeführt ist,
- Abdichten des Übergangsbereichs oder der Übergangsbereiche (42) zwischen dem Flächenelement (31) der Manschettenvorrichtung (30) und der Dampfbremse oder Dampfsperre (20) mittels des mindestens einen Befestigungselements (40),
- Abdichten des Übergangsbereichs oder der Übergangsbereiche (41) zwischen dem schlauchförmigen Element (35) der Manschettenvorrichtung (30) und dem mindestens einen Körper (60) mit folgenden Schritten:
- Verschließen, insbesondere Abschnüren des ersten Bereichs des schlauchförmigen Elements (35) mittels des ersten Verschlusselements (38) derart, dass der Körper (60) eng von dem schlauchförmigen Element (35) umgeben ist,
- Einfüllen des Dichtstoffes (39) über eines der Enden des schlauchförmigen Elements (35), derart, dass ein Bereich des schlauchförmigen Elements (35) an dem Verschlusselement (38) mit dem Dichtstoff (39) befüllt ist,
- Verschließen, insbesondere Abschnüren des zweiten Bereichs des schlauchförmigen Elements (35) mittels des zweiten Verschlusselements (38') derart, dass der mindestens eine Körper (60) eng von dem schlauchförmigen Element (35) umgeben ist und der Dichtstoff (39) im Wesentlichen zwischen den beiden Verschlusselementen (38, 38') angeordnet ist.

16. Verfahren nach Anspruch 15,
**gekennzeichnet durch** den weiteren Schritt:
Kürzen des schlauchförmigen, sich verjüngend ausgebildeten Elements (35) an dem dem Flächenelement (31) abgewandten Ende zur Ausbildung eines dem mindestens einem Körper (60) angepassten Durchmessers.

## Claims

1. A system (10) for air tight sealing of an in particular moisture adaptive vapor brake or vapor barrier (20) which is used in particular for heat insulation of buildings at a penetration portion (21) at which the vapor brake or vapor barrier (20) is penetrated by at least one cable or similar element (60), comprising:
- a jacket device (30), including
- a flat element (31) in particular for air tight application of the jacket device (30) on the vapor brake or vapor barrier at the penetration portion,
- a hose element (35) for enclosing the at least one element (60),
- at least one attachment device (40) for attaching, in particular adhesive sealing a transition portion or transition portions (42) between the flat element (31) and the vapor brake or vapor barrier,
- at least one first closure element (38) and one second closure element (38') for closing, in particular constricting a transition portion or transition portions (41) between the hose-shaped element (35) and the at least one element (60) at a first portion and at a second portion of the hose shaped element (35), and
- a sealant (39) for filling the hose shaped element (35) between the two closure elements (38, 38').

2. The system according to claim 1, wherein the flat element (31) is configured with a cutout portion (32) that is in particular arranged in the center and the hose shaped element (35) is arranged at the flat element (31), wherein the hose element (35) has openings at its ends for passing the element (60) through and leads with one end into the cutout portion (32) of the flat element (31), wherein the hose element (35) is integrally connected with the flat element (31), in particular connected air tight, and configured so that it is closable through the closure elements (38, 38') for permanent air tight closure, so that the element (60) is tightly enclosed by the hose element (35).

3. The system according to claim 1 or 2, wherein the jacket device (30) is applicable to the vapor brake or vapor barrier (20) through the surface element (31), so that the penetration portion (21) is covered.

4. The system according to one of the preceding claims, wherein the attachment device is configured as at least one gluing element (40) in particular for air tight sealing.

5. The system according to one of the preceding claims, wherein the hose shaped element (35) of the jacket device (30) is configured so that it tapers away from the surface element (31).

6. The system according to one of the preceding claims, wherein the hose shaped element (35) of the jacket device (30), in particular the tapering hose element is configured so that it can be shortened to a desired length.

7. The system according to one of the preceding claims, wherein the hose element (35) of the jacket device (30) is bendable without damage by up to 90° within a distance of less than 4 cm starting at the surface element (31).

8. The system according to one of the preceding claims, wherein the jacket device (30) is configured from the material of the vapor brake or vapor barrier.

9. The system according to one of the preceding claims, wherein the jacket device (30) is made from moisture adaptive foil, in particular polyamide foil.

10. The system according to one of the preceding claims, wherein the jacket device (30) is made from aluminum foil or similar water-vapor impermeable or air impermeable material.

11. The system according to one of the preceding claims, wherein the jacket device (30) is provided as an integral one-piece formed component.

12. The system according to one of the preceding claims, wherein the surface element (31) and the hose shaped element (35) of the jacket device (30) have different material thicknesses and/or are configured from different materials.

13. The system according to one of the preceding claims, wherein the closure element (38, 38') is configured as a cable tie, a tube clamp or a string or similar element.

14. The system according to one of the preceding claims, wherein the sealant (39) is a silicon material or similar material.

15. A method for air tight sealing of a in particular moisture adaptive vapor brake or vapor barrier (20) which is provided in particular for thermally insulating buildings at a penetration portion (21) where the vapor brake or vapor barrier (20) is penetrated by at least one cable or similar element (60) with a system according to one of the claims 1 through 14, the method comprising the following steps:
- applying the vapor brake or vapor barrier (20) at a predetermined location;
- cutting the vapor barrier or the vapor brake (20) out in portions which are penetrated by the element for forming the penetration portion (21);
- covering the penetration portion (21) with the jacket device (30) so that the at least one element (60) is run through the jacket device (30);
- sealing the transition portion or the transition portions (42) between the surface element (31) of the jacket device (30) and the vapor brake or vapor barrier (20) through the at least one attachment element (40);
- sealing the transition portion or the transition portions (41) between the hose shaped element (35) of the jacket device (30) and the at least one element (60) with the following steps:
- closing, in particular constricting the first portion of the hose shaped element (35) through the first closure element (38) so that the element (60) is tightly enveloped by the hose element (35);
- filling in the sealant (39) through one of the ends of the hose element (35) so that a portion of the hose element (35) at the closure element (38) is filled with the sealant (39); and
- closing, in particular strangulating the second portion of the hose element (35) through the second closure element (38') so that the at least one element (60) is tightly enveloped by the hose shaped element (35) and the sealant (39) is essentially arranged between the two closure elements (38, 38').

16. The method according to claim 15, further including the step:
- shortening the tapering hose element (35) at an end oriented away from the surface element (31) for forming a diameter that is adapted to the at least one element (60).

## Revendications

1. Système (10) pour rendre étanche à l'air une barrière pare-vapeur ou un écran pare-vapeur (20), notamment à humidité contrôlée, qui est prévu notamment pour être utilisé dans le calorifugeage de bâtiments, dans une région de traversée (21) au niveau de laquelle l'écran pare-vapeur ou la barrière pare-vapeur (20) est traversé par au moins un câble ou un corps analogue (60), ledit système comportant
- un dispositif de garniture (30) comportant
- un élément plan (31) destiné à placer, notamment de façon étanche, le dispositif de garniture (30) sur l'écran pare-vapeur ou la barrière pare-vapeur au niveau de la région de traversée,
- un élément (35) en forme de tuyau destiné à enserrer l'au moins un corps (60),
- au moins un moyen de fixation (40) destiné à fixer, notamment au moyen d'un adhésif, une région de transition ou des régions de transition (42) entre l'élément plan (31) et l'écran pare-vapeur ou la barrière pare-vapeur,
- au moins un premier élément de fermeture (38) et un deuxième élément de fermeture (38') destinés à fermer, notamment au moyen d'un lacet, une région de transition ou des régions de transition (41) entre l'élément (35) en forme de tuyau et l'au un corps (60) au niveau d'une première région et d'une deuxième région de l'élément (35) en forme de tuyau,
- une matière d'étanchéité (39) destinée à remplir l'élément (35) en forme de tuyau entre les deux éléments de fermeture (38, 38').

2. Système selon la revendication 1, **caractérisé en ce que**
l'élément plan (31) est conformé avec une région perforée (32) disposée notamment au milieu, et **en ce que** l'élément (35) en forme de tuyau est disposé au niveau de l'élément plan (31), l'élément (35) en forme de tuyau comportant aux extrémités des ouvertures destinées au passage du corps (60) et débouchant par une extrémité dans la région perforée (32) de l'élément plan (31),
l'élément (35) en forme de tuyau étant relié d'une seule pièce, notamment de façon étanche à l'air, à l'élément plan (31),
et étant conformé de telle sorte qu'il peut être fermé au moyen des éléments de fermeture (38, 38') afin de réaliser l'étanchéité à l'air permanente de sorte que le corps (60) est étroitement entouré par l'élément (35) en forme de tuyau.

3. Système selon la revendication 1 ou 2, **caractérisé en ce que** le dispositif de garniture (30) peut être placé sur l'écran pare-vapeur ou la barrière pare-vapeur (20) au moyen de l'élément plan (31) de telle sorte que la région de traversée (21) soit recouverte.

4. Système selon l'une des revendications précédentes, **caractérisé en ce que** le moyen de fixation est conformé au moins en élément de collage (40) destiné à réaliser l'étanchéité notamment à l'air.

5. Système selon l'une des revendications précédentes, **caractérisé en ce que** l'élément (35) en forme de tuyau du dispositif de garniture (30) présente une conformation effilée dans une direction opposée à l'élément plan (31).

6. Système selon l'une des revendications précédentes, **caractérisé en ce que** l'élément (35) en forme de tuyau du dispositif de garniture (30), notamment l'élément en forme de tuyau présentant une conformation effilée, est conformé de telle sorte qu'il peut être raccourcie sur une longueur souhaitée.

7. Système selon l'une des revendications précédentes, **caractérisé en ce que** l'élément (35) en forme de tuyau du dispositif de garniture (30) présente une capacité de flexion, notamment sans endommagement, pouvant aller jusqu'à 90° sur une étendue de moins de 4 cm à partir de l'élément plan (31).

8. Système selon l'une des revendications précédentes, **caractérisé en ce que** le dispositif de garniture (30) est conformé à partir de la matière de l'écran pare-vapeur ou de la barrière pare-vapeur.

9. Système selon l'une des revendications précédentes, **caractérisé en ce que** le dispositif de garniture (30) est conformé à partir d'une feuille à humidité contrôlée, notamment une feuille de polyamide.

10. Système selon l'une des revendications précédentes, **caractérisé en ce que** le dispositif de garniture (30) est conformé à partir d'une feuille d'aluminium ou d'une matière analogue imperméable à la vapeur d'eau et imperméable à l'air.

11. Système selon l'une des revendications précédentes, **caractérisé en ce que** le dispositif de garniture (30) est prévu sous la forme d'une pièce moulée monobloc.

12. Système selon l'une des revendications précédentes, **caractérisé en ce que** l'élément plan (31) et l'élément (35) en forme de tuyau du dispositif de garniture (30) présentent des épaisseurs de matière différentes et/ou sont conformés à partir de matières différentes.

13. Système selon l'une des revendications précédentes, **caractérisé en ce que** l'élément de fermeture (38, 38') se présente sous la forme d'un serre-câble, d'un collier pour tuyau, d'un lacet ou d'un élément analogue.

14. Système selon l'une des revendications précédentes, **caractérisé en ce que** la matière d'étanchéité (39) est une matière silicone ou une matière analogue.

15. Procédé pour rendre étanche à l'air une barrière pare-vapeur ou un écran pare-vapeur (20), notamment à humidité contrôlée, qui est prévu notamment pour être utilisé dans le calorifugeage de bâtiments, dans une région de traversée (21) au niveau de laquelle l'écran pare-vapeur ou la barrière pare-vapeur (20) est traversé par au moins un câble ou un corps analogue (60), le procédé comportant un système selon l'une des revendications 1 à 14,
le procédé présentant les étapes suivantes consistant à :
- placer l'écran pare-vapeur ou la barrière pare-vapeur (20) à un emplacement prévu pour cela,
- découper l'écran pare-vapeur ou la barrière pare-vapeur (20) dans des régions qui sont traversées par le corps, afin de former la région de traversée (21),
- recouvrir la région de traversée (21) avec le dispositif de garniture (30) de sorte que l'au moins un corps (60) est guidé à travers le dispositif de garniture (30),
- rendre étanche la région de transition ou les régions de transition (42) entre l'élément plan (31) du dispositif de garniture (30) et l'écran pare-vapeur ou la barrière pare-vapeur (20) au moyen de l'au moins élément de fixation (40),
- rendre étanche la région de transition ou les régions de transition (41) entre l'élément (35) en forme de tuyau du dispositif de garniture (30) et l'au moins un corps (60) par les étapes suivantes consistant à :
- fermer, notamment lacer, la première région de l'élément (35) en forme de tuyau au moyen du premier élément de fermeture (38) de sorte que le corps (60) est étroitement entouré par l'élément (35) en forme de tuyau,
- introduire la matière d'étanchéité (39) par l'une des extrémités de l'élément (35) en forme de tuyau de sorte qu'une région de l'élément (35) en forme de tuyau au niveau de l'élément de fermeture (38) est remplie avec de la matière d'étanchéité (39),
- fermer, notamment lacer, la deuxième région de l'élément (35) en forme de tuyau au moyen du deuxième élément de fermeture (38') de sorte que l'au moins un corps (60) est étroitement entouré par l'élément (35) en forme de tuyau et la matière d'étanchéité (39) est disposée sensiblement entre les deux éléments de fermeture (38, 38').

16. Procédé selon la revendication 15, **caractérisé par** l'étape supplémentaire consistant à :
raccourcir l'élément (35) en forme de tuyau et de conformation effilée à l'extrémité opposée à l'élément plan (31) afin d'avoir un diamètre adapté à l'au moins un corps (60).
